# EUROPEAN PATENT APPLICATION

(11) **EP 4 786 834 A1**
(43) Date of publication of application: **05.08.2026**
(21) Application number: 24871973.4
(22) Date of filing: 17.09.2024
(51) Int. Cl.: F16K 31/44, F16K 39/04

(54) **SWITCHING VALVE**

(30) Priority: 25.09.2023 JP 2023160197
(71) Applicant: Eagle Industry Co., Ltd., Minato-ku Tokyo 105-8587 (JP)
(72) Inventor: MATSUZAKI Akitaka, Tokyo 105-8587 (JP); KAWATO Tadanobu, Tokyo 105-8587 (JP); KONDO Shinji, Tokyo 105-8587 (JP); OGAWA Noriyuki, Tokyo 105-8587 (JP); ENOKIJIMA Fuminobu, Kariya-shi, Aichi 448-8671 (JP); TAKEYAMA Yukihiro, Kariya-shi, Aichi 448-8671 (JP)
(74) Representative: WSL Patentanwälte Partnerschaft mbB
(86) International application number: PCT/JP2024/033142
(87) International publication number: WO 2025/070179

(57) **Abstract**

There is provided a switching valve capable of reducing the generation of a large frictional force. A switching valve V includes a housing 10 having an inlet passage Pi and an outlet passage Pe; and a valve body 20 rotatably provided inside the housing 10 to switch between the inlet passage Pi and the outlet passage Pe. A pressure acting on the valve body 20 is changeable. The valve body 20 is guided to be rotatable relative to a support shaft 14 provided inside the housing 10, and a resilient device 30 is provided between a seat portion 17 of the support shaft 14 and the valve body 20.

## Description

### {TECHNICAL FIELD}

The present invention relates to a switching valve, for example, a switching valve that opens and closes flow passages through which a refrigerant flows or switches between the flow passages.

### {BACKGROUND ART}

In various industrial fields, refrigerant circuits in which a refrigerant supply source is connected to a refrigerant load such as a refrigerant-operated device or a heat exchanger by flow passages are used. Some of such refrigerant circuits may be provided with a switching valve for opening and closing the flow passages or switching between the flow passages.

For example, a switching valve of Patent Citation 1 is mainly composed of a casing, a slider, and a spring. A discharge pipe through which a refrigerant discharged from a compressor flows and a suction pipe through which the refrigerant suctioned into the compressor flows are connected to the casing. In addition, two ports are formed in the casing, in addition to a port connected to the discharge pipe or the suction pipe. The slider is disposed and rotatable inside the casing. The spring is disposed between a valve seat of the casing and the slider.

Since the pressure difference between the inside and outside of the slider is large during operation of the compressor, the slider is brought into close contact with the valve seat against the biasing force of the spring. Accordingly, a flow passage through which one of the two ports and the port to which the discharge pipe is connected communicate with each other and a flow passage through which the other of the two ports and the port to which the suction pipe is connected communicate with each other can be partitioned off from each other.

In addition, since the pressure difference between the inside and outside of the slider is small when the compressor is stopped, the slider is pushed by the spring and separates from the valve seat. Accordingly, when the slider rotates, a large frictional force is prevented from being generated between the slider and the valve seat.

### {CITATION LIST}

### {Patent Literature}

Patent Citation 1: JP S62-288780 A (Page 4, FIG. 1)

### {SUMMARY OF INVENTION}

### {Technical Problem}

In such a switching valve of Patent Citation 1, the spring is in contact with the valve seat regardless of whether or not the pressure acting on the slider changes. Therefore, as the slider rotates, the spring comes into sliding contact with the valve seat, and the slider comes into contact with and separates from the valve seat, thereby generating a large frictional force between the spring and the valve seat, which is a risk.

The present invention has been made in view of such a problem, and an object of the present invention is to provide a switching valve capable of reducing the generation of a large frictional force.

### {Solution to Problem}

In order to solve the foregoing problem, a switching valve according to the present invention is a switching valve including a housing having an inlet passage and an outlet passage; and a valve body rotatably provided inside the housing and configured to switch between the inlet passage and the outlet passage, wherein the valve body is configured to receive a pressure which is changeable, the valve body is configured to be guided to be rotatable relative to a support shaft provided inside the housing, and a resilient device is disposed between a seat portion provided on the support shaft and the valve body. According to the feature of the present invention, even when the pressure acting on the valve body changes, the generation of a large frictional force between the valve body and the housing can be reduced. Accordingly, the valve body can be accurately disposed at a predetermined position.

It may be preferable that the support shaft is fixed to the housing, and bearings are be interposed between the support shaft and the valve body. According to this preferable configuration, the valve body can be smoothly moved along the support shaft.

It may be preferable that the bearings are provided on both axial end sides of the support shaft such that the resilient device disposed between the bearings. According to this preferable configuration, the valve body can be more smoothly moved along the support shaft.

It may be preferable that a stopper configured to restrict an extension of the resilient device is provided on the support shaft. According to this preferable configuration, the valve body pushed and moved by the resilient device can be prevented from coming into contact with other objects.

It may be preferable that, the resilient device includes a spring and a disk that comes into sliding contact with the valve body. According to this preferrable configuration, since the disk comes into sliding contact with the valve body when the valve body rotates, the generation of a large frictional force between the resilient device and the valve body can be reduced.

It may be preferable that the support shaft is disposed to penetrate through the valve body from an outside to an inside, and overlaps the outlet passage in an axial direction of the support shaft. According to this preferable configuration, the support shaft installed to protrude to the inside of the valve body can function as a guide for a fluid flowing toward the outlet passage. Accordingly, since smooth movement of the fluid toward the outlet passage is facilitated, the valve body is less likely to be shifted out of position, so that holding the valve at the predetermined valve position is facilitated.

### {BRIEF DESCRIPTION OF DRAWINGS}

FIG. 1 is a schematic diagram illustrating a refrigerant circuit to which a switching valve according to an embodiment of the present invention is applied.
FIG. 2 is a perspective view of the switching valve in the embodiment.
FIG. 3 is a cross-sectional view of the switching valve in a state where a gap between a valve body and a housing is sealed in the embodiment.
FIG. 4 is a cross-sectional view of the switching valve in a state where the valve body is lifted in the embodiment.
FIG. 5 is an enlarged view of a part of FIG. 4.
FIG. 6 is a top view illustrating the valve body rotated from a first rotation position to a second rotation position in the embodiment.

### {DESCRIPTION OF EMBODIMENTS}

A mode for implementing a switching valve according to the present invention will be described below based on an embodiment. Hereinafter, a refrigerant switching valve will be described as an example of the switching valve; however, the switching valve may be a valve that switches a fluid other than a refrigerant.

### {Embodiment}

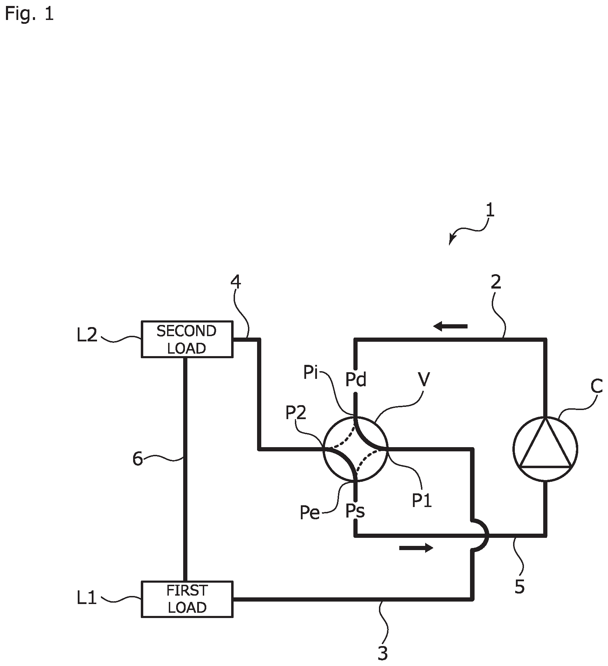

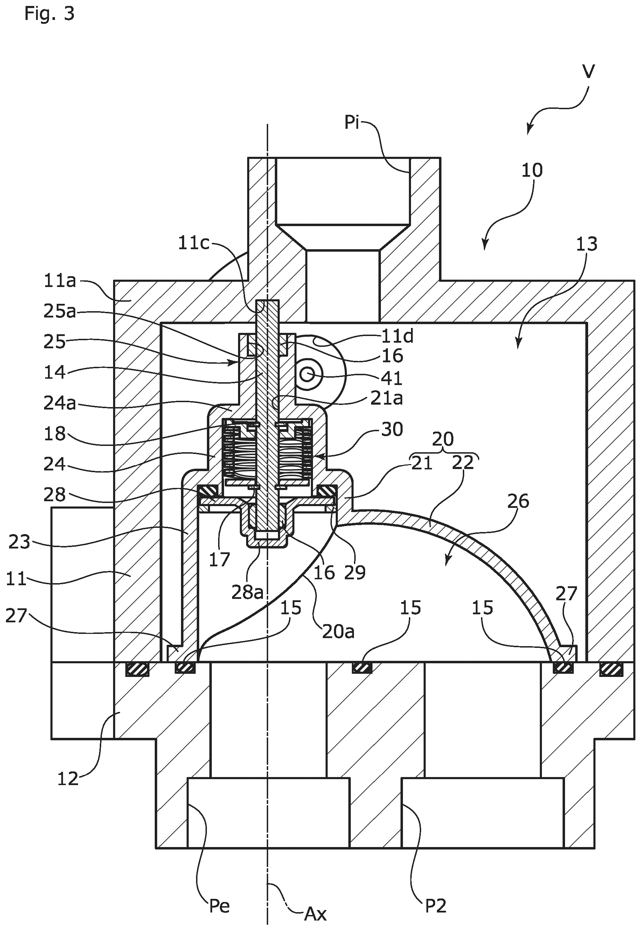

A refrigerant switching valve as a switching valve according to an embodiment of the present invention will be described with reference to FIGS. 1 to 6. Hereinafter, the top and bottom of FIG. 3 will be described as the top and bottom of the refrigerant switching valve.

As illustrated in FIG. 1, a refrigerant switching valve V of the present invention is a four-way valve provided in a refrigerant circuit 1. The refrigerant circuit 1 is provided with a compressor C, a first load L1, and a second load L2, in addition to the refrigerant switching valve V. The compressor C discharges a discharge fluid Pd that is a compressed highpressure refrigerant, and suctions a suction fluid Ps that is a depressurized low-pressure refrigerant.

The refrigerant switching valve V is provided with an inlet port Pi serving as an inlet passage connected to a discharge side of the compressor C through a discharge flow passage 2; a first port P1 connected to the first load L1 through a first flow passage 3; a second port P2 connected to the second load L2 through a second flow passage 4; and an outlet port Pe serving as an outlet passage connected to a suction side of the compressor C through an outlet flow passage 5. The first load L1 and the second load L2 are connected through a third flow passage 6.

The refrigerant switching valve V performs switching such that the discharge fluid Pd delivered from the compressor C passes through the first load L1 and then the second load L2 as illustrated by solid lines or the discharge fluid Pd passes through the second load L2 and then the first load L1 as illustrated by dashed lines. Hereinafter, the refrigerant switching valve V will be described in detail.

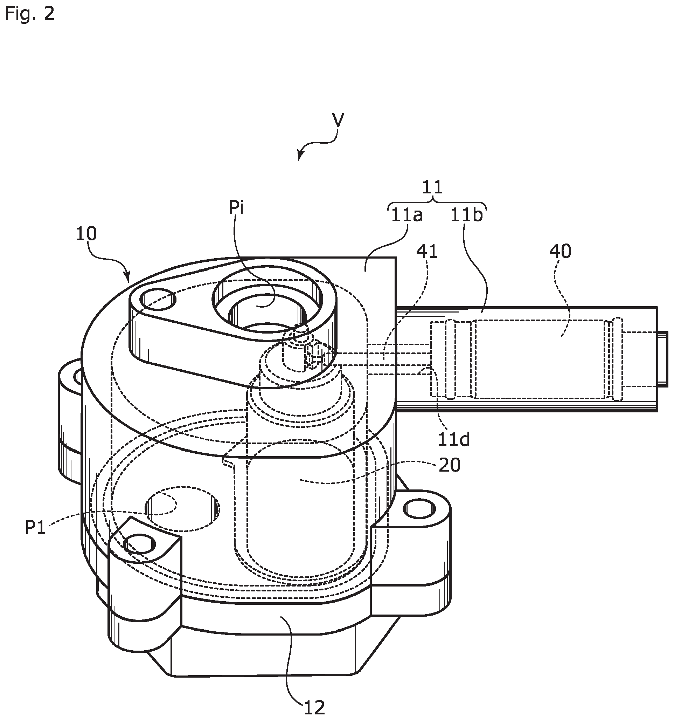

As illustrated in FIGS. 2 and 3, the refrigerant switching valve V is mainly composed of a housing 10, a valve body 20, a resilient device 30 (see FIG. 3), and a drive source 40 (see FIG. 2). In FIGS. 2 and 3, the valve body 20 is in a first rotation position, communicates the inlet port Pi with the first port P1 (see FIG. 2), and communicates the second port P2 (see FIG. 3) with the outlet port Pe (see FIG. 3).

The housing 10 is mainly composed of a casing 11 and a stator 12.

Referring to FIG. 2, the casing 11 is made of resin, and is composed of a main body 11a and a socket 11b. Incidentally, the casing 11 may be made of metal, and the material may be changed as appropriate.

The main body 11a has a tubular shape with a ceiling that opens downward, and includes a ceiling having a stepped plate shape that is formed in a D-shape when viewed from above, and a peripheral wall extending downward from a peripheral edge of the ceiling.

The inlet port Pi is formed in the ceiling of the main body 11a so as to penetrate therethrough in an up-down direction.

Referring to FIG. 3, a support hole 11c recessed upward from a lower end surface of the ceiling is formed in the ceiling of the main body 11a. A support shaft 14 is inserted and fixed to the support hole 11c.

Returning to FIG. 2, the socket 11b has a cylindrical shape with a bottom, and protrudes outward from the peripheral wall of the main body 11a. In addition, the drive source 40 is inserted and fixed inside the socket 11b. A gap between the socket 11b and the drive source 40 is sealed by a packing.

In addition, a through-hole 11d is formed in the peripheral wall of the main body 11a and a bottom portion of the socket 11b so as to penetrate therethrough in an axial direction of the socket 11b. A rod 41 to be described later is inserted through the through-hole 11d, and the tip of the rod 41 is disposed in a valve chamber 13 (see FIG. 3).

As illustrated in FIGS. 2 and 3, the first port P1 (see FIG. 2), the second port P2 (see FIG. 3), and the outlet port Pe (see FIG. 3) are formed in the stator 12. The first port P1, the second port P2, and the outlet port Pe all penetrate through the stator 12 in the up-down direction.

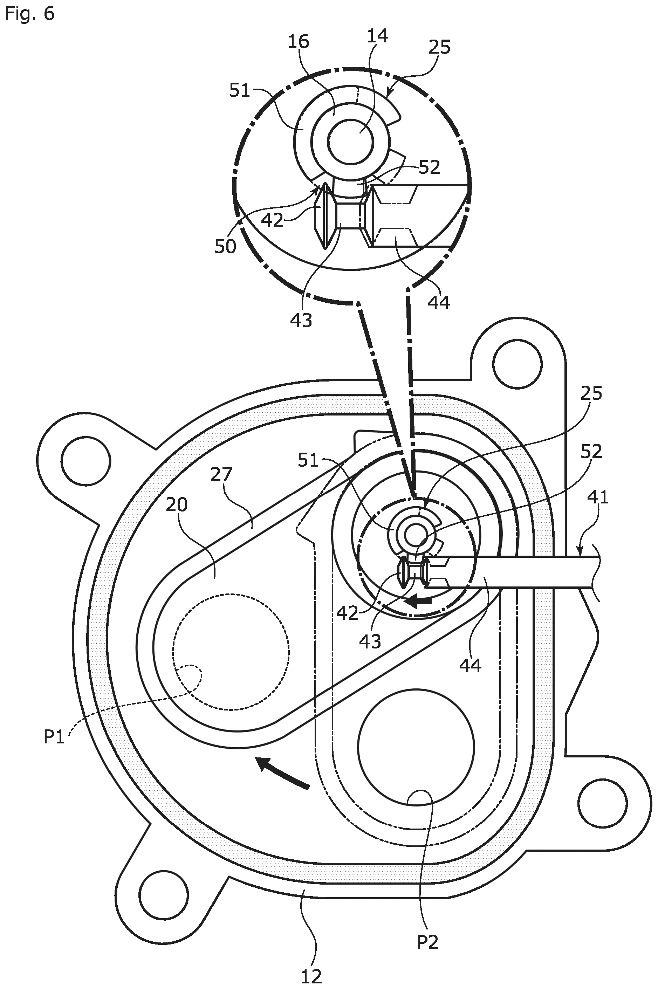

In addition, each of the first port P1, the second port P2, and the outlet port Pe is formed to be located at one of the vertices of an isosceles triangle when the stator 12 is viewed from above (see FIG. 6). A separation dimension between the first port P1 and the outlet port Pe is substantially the same as a separation dimension between the second port P2 and the outlet port Pe.

Referring to FIG. 3, the main body 11a and the stator 12 are fastened together using bolts (not illustrated). In addition, a groove recessed downward from an upper end surface along an edge of the stator 12 is formed in the stator 12. The main body 11a is pressed against a packing disposed in the groove. A gap between the main body 11a and the stator 12 is sealed. The main body 11a and the stator 12 form the valve chamber 13.

In addition, the stator 12 includes a groove formed along a leg portion 27 (to be described later) of the valve body 20 stopped at the first rotation position and the leg portion 27 of the valve body 20 stopped at the second rotation position. The groove is recessed downward from the upper end surface of the stator 12. In addition, a packing 15 is disposed in the groove.

The valve body 20 is made of resin, and is formed in an elliptical shape when viewed from above which includes a cylindrical portion 21 having a circular shape when viewed from above, and a dome portion 22 extending in a U-shape from a lower end portion of the cylindrical portion 21 in a radially outward direction when viewed from above. Incidentally, the valve body 20 may be made of metal, and the material may be changed as appropriate.

The cylindrical portion 21 has a cylindrical shape having steps on an outer-diameter side, and includes a large-diameter tubular portion 23, a small-diameter tubular portion 24, and a rotary body 25.

The large-diameter tubular portion 23 includes a peripheral wall extending in an axial direction, the lower portion of which has a substantially semicircular arc shape when viewed from above and the upper portion of which has a tubular shape, and a ceiling having an annular shape and extending from an upper end of the peripheral wall toward an inner-diameter side. The peripheral wall and the dome portion 22 are connected at an oblique boundary line 20a. The large-diameter tubular portion 23 and the dome portion 22 form a communication passage 26 in which the respective internal spaces of the large-diameter tubular portion 23 and the dome portion 22 are continuous with each other.

In addition, the leg portion 27 having an annular shape and a rectangular cross-section, which is continuous along the edges of the large-diameter tubular portion 23 and the dome portion 22, is formed at the lower ends of the large-diameter tubular portion 23 and the dome portion 22.

A cap 28 having an upside-down hat shape in a cross-sectional view and a stopper 29 having a C-shape are disposed at the upper end of the peripheral wall of the large-diameter tubular portion 23. In a state where the cap 28 is disposed on the ceiling side of the large-diameter tubular portion 23, the stopper 29 is fitted to the peripheral wall to hold the cap 28.

A groove having an annular shape and recessed upward from a lower end surface of the ceiling of the large-diameter tubular portion 23 is formed in the ceiling. The cap 28 is pressed against an O-ring disposed in the groove. A gap between the ceiling and the cap 28 is sealed. Namely, the cap 28 is one of members that define the communication passage 26.

A depression 28a recessed downward from an upper end surface of the cap 28 is formed at the radial center of the cap 28. A bushing 16 serving as a bearing for the support shaft 14 is disposed in the depression 28a.

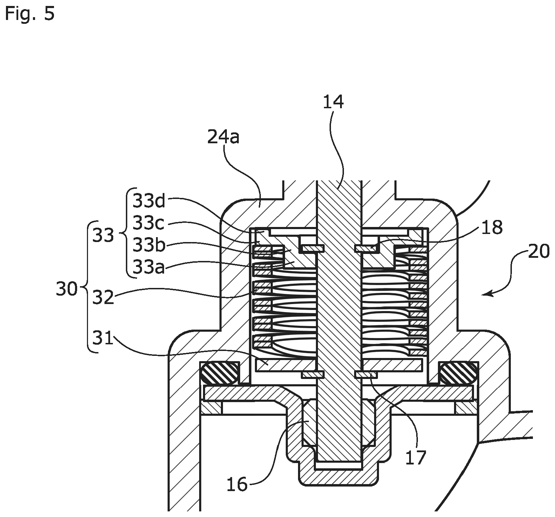

The small-diameter tubular portion 24 includes a peripheral wall extending upward from an upper end surface at the radial center of the ceiling of the large-diameter tubular portion 23, and a ceiling 24a having an annular shape and extending from an upper end of the peripheral wall toward the inner-diameter side. Referring to FIG. 5, the ceiling 24a is in contact with an upper spring retainer 33 of the resilient device 30 at the bottom thereof, and the upper spring retainer 33 is in contact with a spring 32 of the resilient device 30 at the bottom thereof. In other words, the valve body 20 is placed on the resilient device 30.

Returning to FIG. 3, the rotary body 25 having a smaller diameter than the small-diameter tubular portion 24 is formed above the small-diameter tubular portion 24. The rotary body 25 is formed in a cylindrical shape extending upward from an upper end surface at the radial center of the ceiling 24a of the small-diameter tubular portion 24. A depression 25a recessed downward from an upper end surface of the rotary body 25 is formed at the radial center of the rotary body 25. The bushing 16 is disposed in the depression 25a. The rotary body 25 transmits power, and the detailed configuration thereof will be described later.

In addition, a through-hole 21a is formed in the cylindrical portion 21 so as to penetrate therethrough in the axial direction. An axis of the through-hole 21a substantially coincides with an axis of the cylindrical portion 21. In addition, the axis of the through-hole 21a substantially coincides with an axis of each of the depression 25a of the rotary body 25 and the depression 28a of the cap 28. Furthermore, the axis of the through-hole 21a substantially coincides with an axis Ax of the outlet port Pe illustrated by an imaginary line in FIG. 3.

The support shaft 14 is inserted through two bushings 16 and the through-hole 21a. Namely, the support shaft 14 is disposed on the axis Ax of the outlet port Pe. The valve body 20 is movable in the axial direction along the support shaft 14, and is rotatable around the support shaft 14.

A lower stopper 17 serving as a seat portion and an upper stopper 18 are fixed to a portion of the support shaft 14, which is located inside the valve body 20. The lower stopper 17 is disposed below and spaced apart from the upper stopper 18. Here, the upper stopper 18 is a stopper that restricts the extension of the resilient device.

The resilient device 30 is provided between the lower stopper 17 and the upper stopper 18.

As illustrated in FIG. 5, the resilient device 30 is composed of a lower spring retainer 31, the spring 32, and the upper spring retainer 33 as a disk.

The lower spring retainer 31 is an annular plate member made of metal, and is inserted onto the support shaft 14 and is disposed above the lower stopper 17. The lower spring retainer 31 comes into contact with the lower stopper 17, thereby being prevented from coming off downward.

The spring 32 is inserted onto the support shaft 14, and is disposed above the lower spring retainer 31. Incidentally, in the present embodiment, the elastic member of the resilient device 30 is the spring 32 that is a coiled wave spring, but may be a coil spring, a leaf spring, or rubber, and the elastic member may be changed as appropriate. In addition, a plurality of elastic members may be disposed in a circumferential direction or the axial direction, and two or more types of elastic members may be disposed.

The upper spring retainer 33 is a stepped cylindrical shape made of metal, and is inserted onto the support shaft 14 and is disposed above the spring 32.

The upper spring retainer 33 includes a bottom portion 33a, a peripheral wall 33b, a protruding portion 33c, and a placement portion 33d.

The bottom portion 33a has an annular flat plate shape. The support shaft 14 is inserted through a through-hole penetrating through the bottom portion 33a in the axial direction.

The peripheral wall 33b has a tubular shape extending upward in the axial direction from an upper surface of an outer-diameter end of the bottom portion 33a.

The upper stopper 18 is disposed on the inner-diameter side of the peripheral wall 33b. In addition, an upper portion of the bottom portion 33a comes into contact with the upper stopper 18, thereby preventing the upper spring retainer 33 from coming off upward.

The protruding portion 33c is an annular flat plate shape extending from an outer peripheral surface of an upper end of the peripheral wall 33b toward the outer-diameter side.

The spring 32 compressed in the axial direction is disposed between a lower end surface of the protruding portion 33c and an upper end surface of the lower spring retainer 31.

The placement portion 33d is an annular protrusion that protrudes upward in the axial direction from an upper surface of an outer-diameter end of the protruding portion 33c. The ceiling 24a of the valve body 20 is placed on the placement portion 33d. In other words, the valve body 20 is suspended on the support shaft 14.

The valve body 20 moves in the axial direction along the support shaft 14 in response to a pressure difference between the inside and outside of the valve body 20. Namely, the axial movement of the valve body 20 is guided by the support shaft 14.

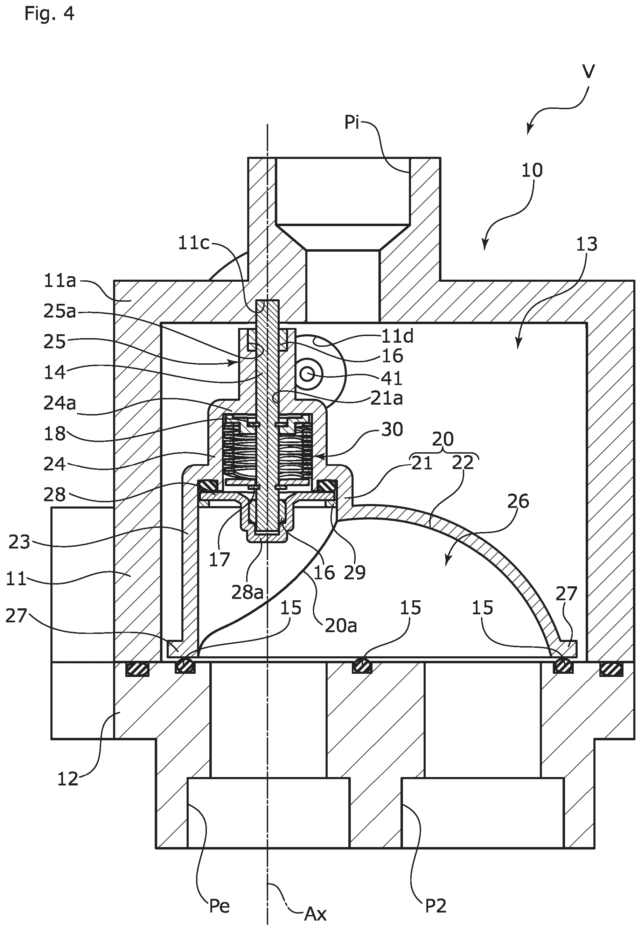

More specifically, the greater the pressure of the refrigerant in a space outside the valve body 20 in the valve chamber 13 becomes than the pressure of the refrigerant inside the valve body 20, that is, inside the communication passage 26, the greater the force that moves the valve body 20 toward the stator 12 side becomes. When the force exceeds the biasing force of the spring 32 of the resilient means 30, the valve body 20 moves toward the stator 12 side while compressing the spring 32 from the state illustrated in FIG. 4, and is pressed against the packing 15 as illustrated in FIG. 3.

As illustrated in FIG. 3, when the valve body 20 is stopped at the first rotation position, the leg portion 27 is pressed against the packing 15 in a state where the discharge fluid Pd flows into the valve chamber 13 from the inlet port Pi. Accordingly, the refrigerant switching valve V partitions the communication passage 26 and the space outside the valve body 20 in the valve chamber 13 off from each other, communicates the inlet port Pi with the first port P1, and communicates the second port P2 with the outlet port Pe.

Meanwhile, the smaller the difference between the pressure of the refrigerant outside the valve body 20 in the valve chamber 13 and the pressure of the refrigerant in the communication passage 26 becomes due to the stoppage of the discharge fluid Pd flowing into the valve chamber 13, the smaller the force that moves the valve body 20 toward the stator 12 side becomes. When the force falls below the biasing force of the spring 32 of the resilient means 30, the valve body 20 moves from the state illustrated in FIG. 3 in response to the extension of the spring 32, and is released from the state of being pressed against the packing 15 as illustrated in FIG. 4, that is, the valve body 20 is lifted.

The lifting of the valve body 20 is stopped when the bottom portion 33a of the upper spring retainer 33 comes into contact with the upper stopper 18.

In such a manner, by rotating the valve body 20 to the second rotation position in a lifted state, the generation of a large frictional force between the valve body 20 and the packing 15 can be reduced. Hereinafter, the rotation of the valve body 20 will be described.

First, the drive source 40 and the rotary body 25 will be described.

The drive source 40 is a solenoid that advances the rod 41 toward the valve chamber 13 side when energized. In addition, the drive source 40 includes a spring (not illustrated), and when the energization of the drive source 40 is stopped, the rod 41 is retracted toward the drive source 40 side by the biasing force of the spring. Incidentally, the drive source may be configured to retract the rod when energized and to advance the rod using the force of the spring when de-energized.

As illustrated in FIG. 6, the rod 41 has a columnar body including a first ridge portion 42, a small-diameter shaft portion 43, and a second ridge portion 44. Incidentally, FIG. 6 illustrates a state where the valve body 20 is moved from the first rotation position illustrated by a dash-double dotted line to the second rotation position illustrated by a solid line. In addition, in FIG. 6, for convenience of illustration, the illustration of some parts such as the packing 15 is omitted.

A recess 50, a long thick portion 51, and a short thick portion 52 are formed on an outer periphery of the rotary body 25. The long thick portion 51 has a half-circular arc shape when viewed from above, and the short thick portion 52 has a one-eighth circular arc shape when viewed from above.

When the valve body 20 is rotated from the first rotation position to the second rotation position, first, as described above, the valve body 20 is lifted.

When the rod 41 advances, the first ridge portion 42 comes into contact with the long thick portion 51. The long thick portion 51 pressed by the advancing rod 41 rotates in a clockwise direction as the advancing distance of the rod 41 increases.

When the rod 41 advances further, the first ridge portion 42 and the long thick portion 51 separate from each other, and the second ridge portion 44 and the short thick portion 52 come into contact with each other. The short thick portion 52 pressed by the advancing rod 41 rotates in the clockwise direction as the advancing distance of the rod 41 increases.

In addition, the valve body 20 that is integrated with the rotary body 25 also rotates in the clockwise direction together with the rotary body 25. During this time, the ceiling 24a of the valve body 20 comes into sliding contact with the placement portion 33d of the upper spring retainer 33; however, the valve body 20 is placed on the placement portion 33d. For this reason, the frictional force generated between the leg portion 27 at the lower end of the valve body 20 and an upper surface of the stator 12 or the packing 15 is reduced. In addition, the valve body 20 is lightweight due to being made of resin, which contributes to reducing frictional force.

In addition, since the placement portion 33d is disposed on an outermost radial side of the upper spring retainer 33, a wide area of sliding contact with the ceiling 24a of the valve body 20 can be secured, which results in excellent slidability.

In addition, since the placement portion 33d is disposed on the outer-diameter side of the upper spring retainer 33, the placement portion 33d can stably support the ceiling 24a of the valve body 20.

In addition, since the placement portion 33d comes into contact with the spring 32 at the bottom thereof and comes into contact with a lower surface of the ceiling 24a at the top thereof, and the placement portion 33d and the spring 32 are disposed on the same axis, the biasing force of the spring 32 can act toward the ceiling 24a in a well-balanced manner.

Thereafter, the rod 41 advances a predetermined distance, thereby causing the valve body 20 to stop at the second rotation position and pressing the valve body 20 against the packing 15 similarly to when the valve body 20 is stopped at the first rotation position.

The valve body 20 stopped at the second rotation position is pressed against the packing 15 similarly to when the valve body 20 is stopped at the first rotation position. Accordingly, the refrigerant switching valve V partitions the communication passage 26 and the space outside the valve body 20 in the valve chamber 13 off from each other, communicates the inlet port Pi with the second port P2, and communicates the first port P1 with the outlet port Pe.

When the valve body 20 is rotated from the second rotation position to the first rotation position, the valve body 20 is lifted similarly to when the valve body 20 is stopped at the first rotation position.

When the energization of the drive source 40 is stopped and the rod 41 is retracted by a spring (not illustrated), the first ridge portion 42 comes into contact with the short thick portion 52.

The short thick portion 52 pressed by the retracting rod 41 rotates in a counterclockwise direction as the retracting distance of the rod 41 increases.

In addition, the valve body 20 that is integrated with the rotary body 25 also rotates in the counterclockwise direction together with the rotary body 25.

Thereafter, as illustrated by a dash-double dotted line in FIG. 6, the rod 41 retracts a predetermined distance, that is, stops at the fully retracted position, thereby causing the valve body 20 to stop at the first rotation position.

As described above, in the refrigerant switching valve V of the present embodiment, even when the pressure acting on the valve body 20 changes and the valve body 20 attempts to move in the axial direction along the support shaft 14, contact between the resilient means 30 that extends and contracts in response to the movement and the housing 10 is prevented.

Namely, the refrigerant switching valve V can reduce the generation of a large frictional force between the valve body 20 and the housing 10. Accordingly, the valve body 20 can be accurately disposed at the first rotation position or the second rotation position.

In addition, not only can the bushings 16 interposed between the support shaft 14 and the valve body 20 smoothly rotate the valve body 20 around the support shaft 14, but the valve body 20 can also be smoothly moved along the support shaft 14.

In addition, since the bushings 16 are disposed on both axial sides of the support shaft 14 with the resilient means 30 sandwiched therebetween, not only can the valve body 20 be more smoothly rotated around the support shaft 14, but the valve body 20 can also be more smoothly moved along the support shaft 14.

In addition, since the upper stopper 18 is provided on the support shaft 14, the extension of the resilient means 30 can be restricted. Accordingly, the valve body 20 pushed and moved by the resilient means 30 can be prevented from coming into contact with other objects such as the casing 11 or the rod 41. Particularly, the contact of the valve body 20 in a direction intersecting a movement direction of the rod 41 can be prevented, thereby preventing interference with the movement of the rod 41 or the generation of a large frictional force between the rod 41 and the valve body 20.

Furthermore, since the upper stopper 18 is disposed on the inner-diameter side relative to the peripheral wall 33b of the upper spring retainer 33, the upper stopper 18 can guide the axial movement of the upper spring retainer 33. Accordingly, the tilting of the upper spring retainer 33 relative to the support shaft 14 is prevented, thereby preventing the valve body 20 placed on the upper spring retainer 33 from tilting as well.

In addition, an axial dimension of the peripheral wall 33b of the upper spring retainer 33 is longer than a distance by which the valve body 20 moves in the axial direction, that is, a movement distance from a state where the lifting of the valve body 20 is restricted by the upper stopper 18 until the leg portion 27 of the valve body 20 is pressed against the packing 15. Accordingly, the ceiling 24a of the valve body 20 is prevented from coming into contact with the upper stopper 18.

In addition, the support shaft 14 is disposed to penetrate through the valve body 20 from the outside to the inside, and overlaps the outlet port Pe in the axial direction. Therefore, whether the stop position of the valve body 20 is the first rotation position or the second rotation position, the support shaft 14 installed to protrude to the inside of the valve body 20 can function as a guide for the refrigerant flowing toward the outlet port Pe. Accordingly, since smooth movement of the refrigerant toward the outlet port Pe is facilitated, the valve body 20 is less likely to be shifted out of position, so that the valve body 20 can be accurately held at the first rotation position or the second rotation position.

In addition, the cap 28 is disposed below the support shaft 14, and the depression 28a of the cap 28 protrudes toward the outlet port Pe along the axis of the outlet port Pe. Therefore, the refrigerant can be more smoothly moved to the outlet port Pe.

The embodiment of the present invention has been described above with reference to the drawings; however, the specific configurations are not limited to the embodiment, and modifications or additions that are made without departing from the scope of the present invention are also included in the present invention.

For example, in the embodiment, a configuration in which the drive source is a solenoid has been described; however, the present invention is not limited thereto, and the drive source may be manual or a motor, and may be changed as appropriate.

In addition, in the embodiment, a so-called rack and pinion configuration in which the valve body is rotated using the axial movement of the rod has been described; however, the present invention is not limited thereto, and the valve body may be rotated by a motor, and drive means for rotating the valve body may be changed as appropriate.

In addition, in the embodiment, the refrigerant switching valve has been described as a four-way valve, but is not limited thereto, and the number of ports may be changed as appropriate, and the refrigerant switching valve may be an opening and closing valve that opens and closes between the inlet passage and the outlet passage.

In addition, in the embodiment, the valve body and the rotary body have been described as being integrated with each other; however, the present invention is not limited thereto, and the valve body and the rotary body that are separate bodies may be assembled by joining, recess-protrusion fitting, or the like.

In addition, in the embodiment, a configuration in which the valve body rotates around the support shaft has been described; however, the present invention is not limited thereto, and the support shaft and the valve body may be configured to rotate integrally. In such a configuration, the rotary body that is separate from the valve body may be provided on the support shaft.

In addition, in the embodiment, the resilient device has been described as being composed of the lower spring retainer, the spring, and the upper spring retainer; however, the present invention is not limited thereto, and the resilient device may be composed of only the spring, and a thrust bearing may be disposed between the valve body and the upper spring retainer, or the configuration of the resilient device may be changed as appropriate.

In addition, in the embodiment, a configuration in which the lower stopper serving as a seat portion that is separate from the support shaft is fixed to the support shaft has been described; however, the present invention is not limited thereto, and a configuration in which the seat portion is formed integrally with the support shaft may be employed. That is, the resilient device may be changed as appropriate as long as the resilient device can be disposed.

In addition, in the embodiment, a configuration in which the upper stopper serving as a stopper that is separate from the support shaft is fixed to the support shaft has been described; however, the present invention is not limited thereto, and a configuration in which the stopper is formed integrally with the support shaft may be employed. That is, the resilient device may be changed as appropriate as long as the extension of the resilient device can be restricted.

In addition, in the embodiment, the packing that seals the gap between the casing and the stator of the housing has been described as being disposed on the stator side; however, the present invention is not limited thereto, and the packing may be disposed on the casing side.

In addition, in the embodiment, the packing that seals the gap between the valve body and the stator has been described as being disposed on the stator side; however, the present invention is not limited thereto, and the packing may be disposed on the valve body side. Even in such a configuration, the packing is lifted together with the valve body and is separated from the stator or the contact area is reduced, so that the frictional force generated between the valve body and the stator can be reduced.

### {REFERENCE SIGNS LIST}

- 1: Refrigerant circuit
- 10: Housing
- 14: Support shaft
- 16: Bushing (bearing)
- 17: Lower stopper (seat portion)
- 18: Upper stopper (stopper)
- 20: Valve body
- 30: Resilient device
- 31: Lower spring retainer
- 32: Spring
- 33: Upper spring retainer (disk)
- Pe: Outlet port (outlet passage)
- Pi: Inlet port (inlet passage)
- V: Refrigerant switching valve (switching valve)

## Claims

1. A switching valve, comprising:
a housing having an inlet passage and an outlet passage; and
a valve body rotatably provided inside the housing and configured to switch between the inlet passage and the outlet passage,
wherein the valve body is configured to receive a pressure which is changeable,
the valve body is configured to be guided to be rotatable relative to a support shaft provided inside the housing, and
a resilient device is disposed between a seat portion provided on the support shaft and the valve body.

2. The switching valve according to claim 1,
wherein the support shaft is fixed to the housing, and bearings are interposed between the support shaft and the valve body.

3. The switching valve according to claim 2,
wherein the bearings are provided on both axial end sides of the support shaft such that the resilient device disposed between the bearings.

4. The switching valve according to claim 1,
wherein a stopper configured to restrict an extension of the resilient device is provided on the support shaft.

5. The switching valve according to any one of claims 1 to 4,
wherein the resilient device includes a spring and a disk that comes into sliding contact with the valve body.

6. The switching valve according to claim 1,
wherein the support shaft is disposed to penetrate through the valve body from an outside to an inside, and overlaps the outlet passage in an axial direction of the support shaft.
